# EUROPEAN PATENT APPLICATION

(11) **EP 0 562 415 A1**
(43) Date of publication of application: **29.09.1993**
(21) Application number: 93104212.1
(22) Date of filing: 16.03.1993
(51) Int. Cl.: H04N 9/64, H04N 9/78

(54) **Circuit for switching between PAL and SECAM mode in a television receiver**

(30) Priority: 25.03.1992 EP 92400813
(71) Applicant: THOMSON CONSUMER ELECTRONICS (S.A.), 92400 Courbevoie (FR)
(72) Inventor: Cheong, Yew Honn, Singapore 0512 (SG)
(74) Representative: Einsel, Robert, Dipl.-Ing.

(57) **Abstract**

A circuit according to prior art using IC TEA5640F has an unsuffiant reability in switching between PAL and SECAM mode. It is an object of the invention to modify said circuit in such a way that the switching between PAL and SECAM becomes more reliable.

A second terminal (26) of the IC (1) is connected to the base of the second transistor (T2) having its emitter connected to operating voltage via a second resistor (R2) and to ground by a zener diode (Z1) and having its collector connected to ground by a third resistor (R3) a tap (a) of which being connected to the base of said first transistor (T1).

Especially for multinorm color television receivers with automatic switching between PAL and SECAM mode.

## Description

The invention relates to a circuit according to the improductary part of claim 1. Within a multinorm color television receiver and automatic switching between different modes like PAL, SECAM and NTSC is necessary. Within a circuit according to prior art in connection with SGS-Thomson IC TEA 5640E V-IDENT pin 11 of the IC is connected to ground via a series connection of a capacitor and resistor, a transistor being connected in parallel to said resistor which is controlled in OFF condition during PAL mode and in ON condition during SECAM mode. A SECAM ident pin 26 of said IC is connected to the base of said transistor wherein in series with the base line its zener diode is provided as a reference element for effecting switching between said two modes at a predetermined threshold. It has been shown that the zener diode has a relative wide reference voltage tolerance so that identification voltage of said chroma IC varies with different load. The voltage between PAL and SECAM mode is also rather small so that in practice there is not a very reliable switching circuit between said modes.

It is an object of the invention to modify said circuit externally to said IC in such a way that a more reliable switching but with said mode is achieved and a more accurate identification between PAL and SECAM can be made.

According to the invention a second terminal is connected to the base of the second transistor having its emitter connected to operating voltage via a second resistor and to ground by a zener diode and having its collector connected to ground by a third resistor (a) tab of which being connected to the base of said first transistor.

A second capacitor may be connected in parallel to said zener diode. A type of said third transistor is connected to the base of the third transistor having its collector connected to said operating potential via a fourth resistor and to the base of said first transistor via a fifth transistor. Preferable said first transistor may be a low noise switching transistor. The switching voltage available at the collector of said third transistor may be used at the switching voltage for switching ON and OFF a color trap liying in the single path of the television receiver.

In order that the invention may be better understood and readily carried out in the effect, an example is described by way of the accompagnied drawing. In the drawing
- Fig. 1: shows a circuit according to the invention for said IC
- Fig. 2: a schedule for explaining the operation of circuit according to Fig. 1 for said two modes PAL and SECAM.

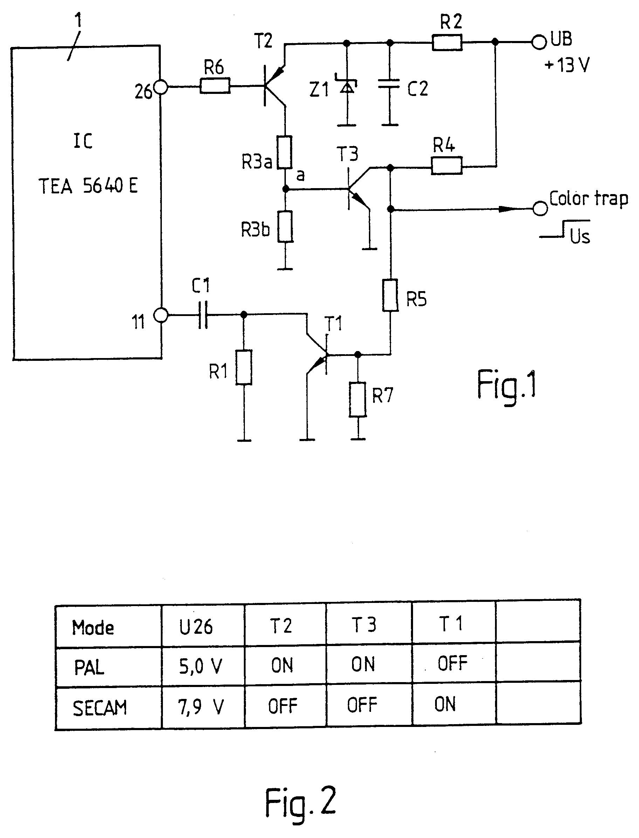

In Fig. 1 there is connected to pin 11 which is the EV IDENT pin of the IC 1 of the type TEA5640E the series connection of the first capacitor C1 and the first resistor R1 shunted with transistor T1. Pin 26 of IC 1 which is pin SECAM ident is connected via resistor R6 to transistor T2 the collector of which is connected to ground via zener diode Z1 a capacitor C2 and via resistor R2 to operating potential UB of + 13 V. Tab (a) resistor R3 in the collector path of T2 is connected to transistor T3 having its collector connected via resistor R4 to UB and furthermore via resistor R5 to base of transistor T1 being connected to ground via resistor R7. The operation of said circuit will be described for PAL and SECAM mode.

Within PAL mode at pin 26 a voltage U26 which is typically 5,0 V, minimal 4,5 V and maximal 5,4 V is available. By this voltage T2 is turned on and zener diode Z1 has a zener volta ge of about 6,8 V. Thereby tap (a) of transistor R3 has a high value so that T3 also is turned on. Thereby via R5 T1 is turned off and resistor R1 is not short circuited.

During SECAM mode U26 has a typical value of 7,9 V, minimal 7,3 V and maximal 8,5 V. By said voltage T2 is turned off so that voltage at tap (a) of resistor R3 falls down and turns off T3. Thereby voltage at base of T1 is increased, so that T1 is turned on and resistor R1 is short circuited. T2 in this way works as a comparator which will only switch on in PAL mode. The circuit prevents the chroma IC 1 from working in PAL mode while a weak SECAM signal is received. Comparator realized by T2 provides a very accurate identification within the PAL and SECAM mode. Transistor T3 provides enough drive to turn on and off transistor T1. The switching signal Us available at the collector of T3 may additionally be used to switch on or off a color trap liying within the signal path of the television receiver.

In an embodiment of the invention tested in practice the element shown in Fig. 1 had the following values.
- R1:: 82 Ohm, especially 82 to 120 Ohm
- R2:: 1 kOhm
- R3a:: 10 kOhm
- R3b:: 1,8 kOhm
- R4:: 4,7 kOhm
- R5:: 100 kOhm
- R6:: 10 kOhm
- T1:: type BC550
- T2:: type BC550C
- T3:: type BC548B
- Z1:: type BV38
- C1:: 1 mikroF
- C2:: 10 mikroF

## Claims

1. Circuit for switching between PAL and SECAM mode in a television receiver including an IC (1) having a V-ident terminal (11) loaded with the series connection of a capacitor (C1) and a resistor (R1) and a first transistor (T1) being connected parallel to said first resistor (R1) and being turned ON in SECAM mode by a driving circuit connected to a SECAM identification terminal (26) of said IC (1), **characterized in** that said second terminal (26) is connected to the base of a second transistor (T2) having its emitter connected to operating voltage (UB) via a second resistor (R2) and to ground by a zener diode (Z1) and having its collector connected to ground by a third resistor (R3) a tap (a) of which being connected to the base of said first transistor (T1).

2. Circuit according to claim 1, **characterized in** that a second capacitor (C2) is connected parallel to said zener diode (Z1).

3. Circuit according to claim 1, **characterized in** that said tap (a) is connected to the base of a third transistor (T3) having its collector connected to said operating potential (UB) via a fourth resistor (R4) and to the base of said first transistor (T1) via a fifth resistor (R5).

4. Circuit according to claim 1, **characterized in** that said first transistor (T1) is a low noise switching transistor.

5. circuit according to claim 1, **characterized in** that voltage at collector of said third transistor (T3) is used as a switching (Us) voltage for switching ON and OFF a color trap within the signal path.
